# EUROPÄISCHE PATENTSCHRIFT

(11) **EP 3 168 969 B1**
(45) Veröffentlichungstag und Bekanntmachung des Hinweises auf die Patenterteilung: **24.01.2018**
(21) Anmeldenummer: 15194761.1
(22) Anmeldetag: 16.11.2015
(51) Int. Cl.: H02K 17/16, H02K 3/48, H02K 17/20, H02K 15/00

(54) **KÄFIGLÄUFER**
CAGE ROTOR
CAGE D'ÉCUREUIL

(43) Veröffentlichungstag der Anmeldung: 17.05.2017
(73) Patentinhaber: Siemens Aktiengesellschaft, 80333 München (DE)
(72) Erfinder: Fischer, Ralf, 90419 Nürnberg (DE); Reinhard, Markus, 91207 Lauf (DE)

(56) Entgegenhaltungen:
- EP-A1- 2 288 004
- DE-A1- 10 247 484
- DE-A1-102009 051 975

## Beschreibung

Die Erfindung betrifft einen Käfigläufer einer Asynchronmaschine, eine Asynchronmaschine deren Verwendung und ein Verfahren zur Herstellung eines Käfigläufers einer Asynchronmaschine.

Käfigläufer von Asynchronmaschinen sind seit langem bekannt und bewährt. Im Laufe der Zeit haben sich für verschiedenste Anwendungen der Asynchronmaschinen unterschiedliche Formen der Käfigstäbe herausgebildet, die jeweils bestimmte elektrische Eigenschaften aufweisen und somit für diese Anwendungen besonders geeignet sind. So werden bei schweranlaufenden Anwendungen häufig Doppelkäfige eingesetzt, bei denen zwei oder mehrere Stäbe in einer Läufernut eingesetzt sind. Auch andere Stabformen, die den Stromverdrängungseffekt begünstigen, werden häufig eingesetzt.

Dabei werden bis zu einer gewissen Baugröße Leiterstäbe durch ein Aluminiumdruckgussverfahren in den Rotor eingebracht. Bei im Durchmesser größeren Maschinen wird aber jeder Stab manuell in den Rotor eingebracht. Jedoch ist für jede Stabform ein eigener Blechschnitt eines Rotorblechs notwendig. Dieser Blechschnitt definiert bei einem Druckgussverfahren die Form des Leiterstabes. Bei eingelegten Stäben wird die Rotornut ebenfalls der Stabform nachempfunden, um durch einen Formschluss einen entsprechend festen Sitz der Stäbe zu erhalten.

Nachteilig dabei ist die Notwendigkeit für jede Stabform einen eigenen Blechschnitt bereitzustellen, was einen erheblichen Aufwand bezüglich der Vielzahl verschiedener Werkzeuge für die Produktion der Bleche bedeutet. Diese Vielzahl der speziellen Stanzwerkzeuge ist sehr kapitalintensiv und diese Stanzwerkzeuge erlauben aufgrund von Verschleißerscheinungen auch nur eine begrenzte Nutzungsdauer.

Ausgehend davon liegt der Erfindung die Aufgabe zugrunde, die Menge der vorgehaltenen Stanzwerkzeuge zu reduzieren, ebenso die Variantenvielfalt der Blechschnitte zu reduzieren, um so einen Käfigläufer zu schaffen, der sich in einfacher Art und Weise auch für ein Baukastensystem eines Asynchronmotors eignet. Dabei sollen sich auch je nach Anwendungszweck der Asynchronmaschine unterschiedliche Leiterquerschnitte bei einer Achshöhe realisieren lassen. Des Weiteren soll ein derartiger Käfigläufer einfach herzustellen zu sein.

Die Lösung der gestellten Aufgabe gelingt durch einen Käfigläufer einer Asynchronmaschine mit radial geschlossenen oder teilgeöffneten Nutaussparungen, mit Leiterstäben, die in den Nutaussparungen angeordnet sind und die durch Metallschaum in den Nutaussparungen fixiert sind.

Die Lösung der gestellten Aufgabe gelingt auch durch eine rotatorische dynamoelektrische Maschine oder lineare dynamoelektrische Maschine, insbesondere Asynchronmotor mit zumindest einem Käfigläufer mit radial geschlossenen oder teilgeöffneten Nutaussparungen, mit Leiterstäben, die in den Nutaussparungen angeordnet sind und die durch Metallschaum in den Nutaussparungen fixiert sind.

Die Lösung der gestellten Aufgabe gelingt auch durch eine Werkzeugmaschine, einen E-Car oder ein Schienenfahrzeug mit zumindest einer dynamoelektrischen Maschine mit zumindest einem Käfigläufer mit radial geschlossenen oder teilgeöffneten Nutaussparungen, mit Leiterstäben, die in den Nutaussparungen angeordnet sind und die durch Metallschaum in den Nutaussparungen fixiert sind.

Die Lösung der gestellten Aufgabe gelingt auch durch ein Verfahren zur Herstellung eines Käfigläufers mit radial geschlossenen oder teilgeöffneten Nutaussparungen, mit Leiterstäben, die in den Nutaussparungen angeordnet sind und die durch Metallschaum in den Nutaussparungen fixiert sind durch folgende Schritte:
- Stanzen einzelner Bleche mit Nutaussparungen,
- Paketieren der Bleche,
- Einsetzen einzelner Leiterstäbe oder Leiterstäbe, die durch einen Kurzschlussring bereits auf einer Seite gebunden sind,
- Ausfüllen der Nutaussparung mit Metallschaum,
- Kontaktieren der fehlenden Kurzschlussringe an einer oder beiden Stirnseiten des Blechpakets des Käfigläufers mit den Leiterstäben.

Erfindungsgemäß weist nunmehr die Fertigung dieses Käfigläufers insbesondere für eine Achshöhe lediglich nur noch einen einzigen Universalblechschnitt auf. Dieser Universalblechschnitt weist vergleichsweise größere und universelle Nutaussparungen auf. Diese Aussparungen können in ihrer Ausgestaltungen frei gewählt werden und sind dabei beispielsweise kreisrund, ellipsenförmig, rechteckig, vieleckig oder trapezförmig ausgestaltet.

Es sind in Umfangsrichtung eines Bleches betrachtet, alle Aussparungen in ihrem Querschnitt gleich. Es sind jedoch auch Variationsmöglichkeiten der Nutaussparungen pro Blech möglich. Des Weiteren sind auch axial innerhalb eines Blechpakets des Rotors unterschiedliche Varianten möglich. Dabei hat jedes Blech die gleichen geometrischen Abmessungen der Nutaussparungen jedoch andere geometrische Formen und oder Abmessungen der Nutaussparungen als die axial folgenden Bleche des Rotors. Es ist somit auch eine axial wiederkehrende Folge von Blechen identischen Blechschnitts möglich.

Entscheidend ist dabei immer, dass die in den Nutaussparungen axial einzusetzenden Leiterstäbe mit ausreichend radialem Spiel in die Nutaussparungen einzusetzen sind. Sowohl die geometrischen Ausgestaltungen als auch die Abmessungen der Nutaussparung beeinflussen dabei das magnetische Verhalten des Käfigläufers und damit letztendlich das angestrebte Betriebsverhalten der Asynchronmaschine.

In diese Nutaussparungen der Bleche bzw. des Blechpakets werden die Leiterstäbe axial eingebracht, die aber nicht notwendigerweise einen engen Presssitz in der Nutaussparung aufweisen müssen. Insbesondere bei kleineren Maschinen wird der Käfig als Ganzes in das Rotorblechpaket eingebracht, dabei sind die Leiterstäbe einseitig bereits mit einem Kurzschlussring verbunden und bilden einen sogenannten Halbkäfig. Dabei reicht auch bereits ein Mindermaß der Stabhöhe.

Metallschäume haben eine durch Poren und Hohlräume bedingte geringe Dichte. Damit ist es möglich ein geringes Gewicht bei hoher spezifischer Steifigkeit und Festigkeit zu realisieren. Derartige Schäume können aus unterschiedlichen Metallen, wie Kupfer, Zink, Stahl bzw. Eisen unter Verwendung geeigneter Treibmittel hergestellt werden.

Beispielsweise werden Metallschäume mittels Metallpulver und einem Metallhydrid hergestellt. Beide Pulver werden miteinander vermischt und danach durch Heißpressen oder Strangpressen zu einem Vormaterial verdichtet. Anschließend wird dieses Vormaterial auf eine Temperatur oberhalb des Schmelzpunktes des jeweilig verwendeten Metalls erhitzt. Dabei setzt das Metallhydrid gasförmigen Wasserstoff frei und schäumt das Gemenge auf. Alternativ zu dieser Herstellungsmethode kann Gas in eine Metallschmelze eingeblasen werden, die zuvor durch Zugabe fester Bestandteile schäumbar gemacht wurde. Ebenso eignet sich als Herstellungsmethode des Metallschaumes Spritzschäumen.

Die durch verschiedene - oben beispielshaft aufgeführten - Fertigungsverfahren entstehenden Schäume können weiterhin in Einphasenschäume, Zweiphasenschäume und Mehrphasenschäume unterteilt werden. Der einphasige Schaum hat als Preform beispielsweise metallische Hohlkugeln. Der Zweiphasenschaum hat als Preform beispielsweise mit Metall beschichtete keramische Hohlkugeln. Der Mehrphasenschaum weist keramische Hohlkugeln mit einem zusätzlichen Bindemittel auf. Metallschäume sind derart variabel ausbildbar, dass sich diese durch eine große Vielzahl unterschiedlicher Strukturen und Werkstoffeigenschaften auszeichnen können. Die durch Hohlräume oder Poren geschaffene Porosität der Schäume reduziert die Dichte der vorgesehenen Bauteile in den Nutaussparungen deutlich und damit das Gesamtgewicht des Rotors.

Zur Herstellung des Metallschaums sind auch klassische Herstellverfahren ähnlich der Herstellung eines Schaumstoffes geeignet. Dies beinhaltet ein physikalisches Schäumen, bei welchem das Material durch einen physikalischen Vorgang geschäumt wird.

Auch auf einer chemischen Basis kann ein Schäumen erfolgen. Beim chemischen Schäumen wird beispielsweise einem Granulat ein Treibmittel, meist in Form eines so genannten Masterbatchgranulates, zugegeben. Durch Wärmezufuhr kann sich dann ein flüchtiger Bestandteil des Treibmittels abspalten, was zum Aufschäumen der Metallschmelze führt.

Eine weitere Option ist das mechanische Schäumen. Hierbei wird beispielsweise Luft oder ein anderes Gas in das zu schäumende Metall oder eine metallische Paste eingerührt. Durch ein Vernetzen des Metalls oder durch Gelieren der Paste verfestigt sich dieser Metallschaum.

In den Nutaussparungen die beispielsweise kreisrund, elliptisch, rundlich oder polygon ausgebildet sein können, werden die Stäbe eingesetzt und in den verbleibenden Raum der Nutaussparung wird nunmehr ein magnetisch leitfähiger Metallschaum z.B. auf Nickel- oder Eisenbasis aufgefüllt, der nach dem Aufschäumen und ggf. durch zusätzliches durch Erhitzen den gesamten restlichen Raum der Nutaussparung einnimmt. Dadurch wird der Stab in der Nutaussparung fixiert und eine ausreichende magnetische Leitfähigkeit hergestellt. Je nach Porengröße und Material des Metallschaumes stellt sich in der Nutaussparung eine magnetische Leitfähigkeit ein, die in jedem Fall über der magnetischen Leitfähigkeit von Luft liegt.

Die Magnetfeldführung lässt einen Fluss, der schwerpunktmäßig durch das Rotoreisen fließt auch im Bereich der mit Metallschaum versetzten Nutaussparungen zu. Die Kraftentwicklung setzt also dort an, so dass die Kraftentwicklung bereits besser ist, als bei einer dickeren Nutisolation z.B. von Schleifringläufern.

Der Metallschaum, der als Füllmaterial zwischen Leiterstab und Blechpaket verwendet wird, ist magnetisch leitfähig und stellt daher eine nachträgliche Anpassung des Rotoreisens an den Stab dar. Gleichzeitig ist der ohmsche Widerstand von Metallschaum deutlich höher als der von Elektroblech, was eine Art Isolation des Stabes in der Nut bedeutet und damit gegenüber der konventionellen Bauform mit eingegossenen Stäben geringere Wirbelstromverluste zur Folge hat. Durch die geringere Dichte des Schaumes gegenüber normalem Elektroblech verringert sich die Schwungmasse gegenüber dem vergleichsweise bekannten Blechpaketen des Rotors. Es ist somit eine hochdynamische Maschine möglich.

In diese Nutaussparungen der Bleche bzw. des Blechpakets werden die Leiterstäbe axial eingebracht, die aber nicht notwendigerweise einen engen Presssitz in der Nutaussparung aufweisen müssen. Insbesondere bei kleineren Maschinen wird der Käfig als Ganzes in das Rotorblechpaket eingebracht, dabei sind die Leiterstäbe einseitig bereits mit einem Kurzschlussring verbunden und bilden einen sogenannten Halbkäfig. Dabei reicht auch bereits ein Mindermaß der Stabhöhe.

Die Poren des Metallschaumes sind dabei aufgrund des "chaotischen" Herstellverfahrens von unterschiedlicher oder gleicher geometrischer Form. Die Abmessungen selbst bewegen sich in einem Zahlenbereich von einigen µm bis zu einigen mm.

Die magnetische Leitfähigkeit des Metallschaumes hängt maßgeblich von der Anzahl und/oder der Größe und/oder der Verteilung der Poren und/oder deren Stegbreiten als auch vom Material des innerhalb der Nutaussparung ab.

Durch die Verwendung nur eines einzigen Universalblechschnitts pro Achshöhe wird ein erheblicher Verbundeffekt herbeigeführt und trotzdem weiterhin die Möglichkeit für verschiedene Stabformen gestattet, um diverse Applikationen, wie Stromverdrängungsläufer, Rundstabläufer, etc. abzudecken. Dies führt zu deutlichen Kostenvorteilen ohne dabei auf technische Vorteile verzichten zu müssen.

Durch die geringere Dichte des Metallschaumes gegenüber normalem Elektroblech verringert sich zusätzlich die Schwungmasse gegenüber dem vergleichsweise bekannten trägheitsbehafteten Blechpaketen des Rotors.

Es ist somit eine hochdynamische Asynchronmaschine für unterschiedlichste Anwendungen möglich, wie sie z.B. bei Werkzeugmaschinen, bei elektrischen Antrieben in E-Cars und Schienenfahrzeugen gefordert wird.

Der Käfigläufer der Asynchronmaschine ist mit radial geschlossenen oder teilgeöffneten Nutaussparungen bzw. Nuten ausgeführt, was die Nutstreureaktanz und damit den Betrieb der Asynchronmaschine beeinflusst.

Die teilgeöffneten Nuten werden dabei insbesondere durch spanabhebendes Abdrehen des Rotorblechpaketes geschaffen. Durch geometrische Gestaltung insbesondere des radial äußeren Bereichs der Nutaussparung kann die Teilöffnung der Nut nach dem Abdrehen gestaltet werden. Mit anderen Worten - eine rundliche Nutaussparung führt nach dem Abdrehen zu einer anderen Teilöffnung der Nut als eine dreiecksförmige Nutaussparung.

Durch die axiale Schrägung der Nuten und damit der Leiterstäbe in ihrem axialen Verlauf werden u.a. die Nutrastmomente des Rotors reduziert.

Die Erfindung sowie weitere vorteilhafte Ausgestaltungen der Erfindung werden anhand eines Ausführungsbeispiels näher erläutert. Darin zeigen:
- FIG 1: einen Längsschnitt durch eine Asynchronmaschine,
- FIG 2: einen Querschnitt durch einen Rotor,
- FIG 3: eine perspektivische Darstellung eines Halbkäfigs,
- FIG 4: bis 6 Ausschnitte eines Rotorblechs mit unterschiedlichen Leiterstabformen.

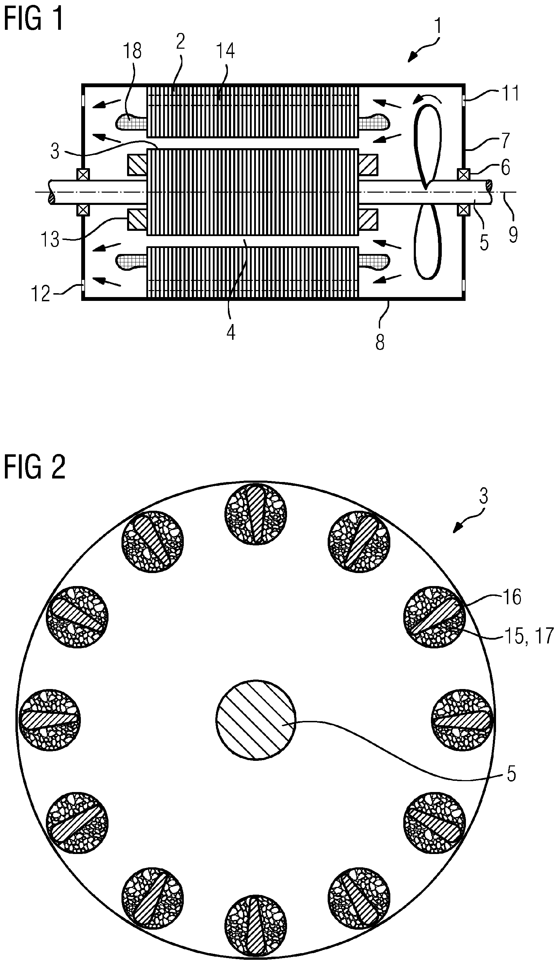

FIG 1 zeigt im Längsschnitt eine Asynchronmaschine 1, die in einem Gehäuse 8 angeordnet ist. Die Asynchronmaschine 1 weist einen Stator 2 auf, der in axialer Richtung geblecht ausgeführt ist und der ein Wicklungssystem 18 aufweist, das in Nuten angeordnet ist, die zu einem Luftspalt der dynamoelektrischen Maschine 1 weisen. Im Bereich des Rückens des Blechpakets des Stators 2 sind im wesentlichen axialverlaufende Kühlkanäle 14 angeordnet durch die eine Kühlluft streichen kann.

Durch den Luftspalt 4, vom Stator 2 beabstandet ist ein Rotor 3 angeordnet, in diesem Fall ein Kurzschlusskäfigläufer, der drehfest mit einer Welle 5 verbunden ist, die sich um eine Achse 9 dreht. Die Welle 5 stützt sich über Lager 6 in Lagerschilden 11 ab, die im Gehäuse 8 angeordnet sind. Die Lagerschilde 7 weisen Einlässe 11 bzw. Auslässe 12 auf, um die dynamoelektrische Maschine 1 als durchzugsbelüftete Maschine betreiben zu können.

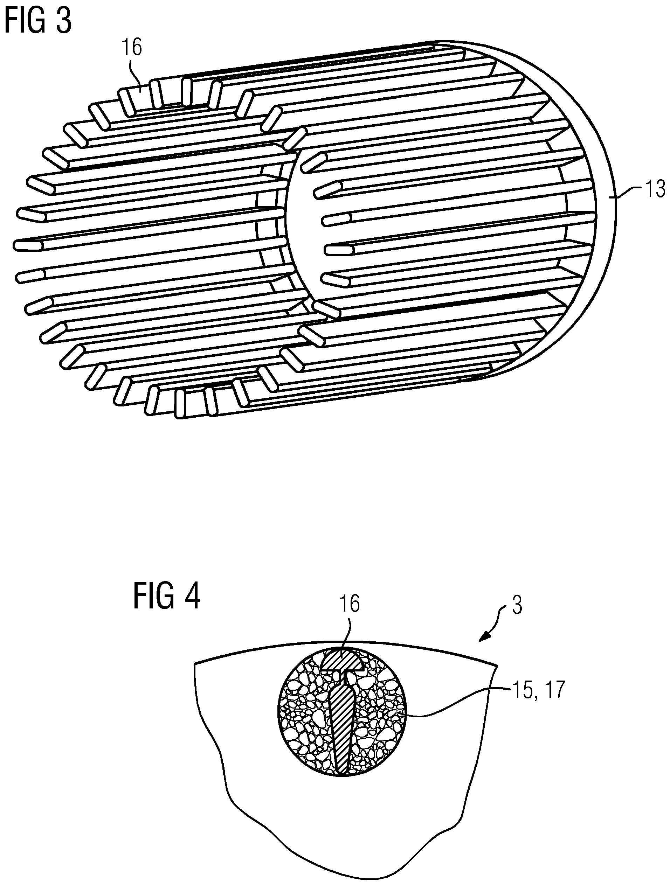

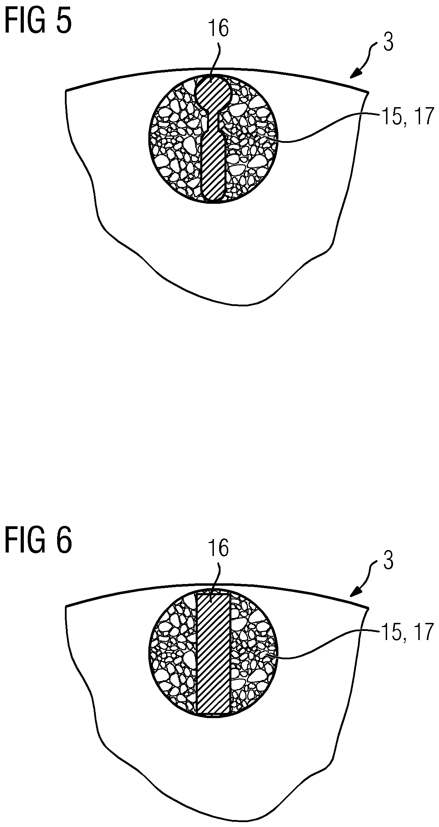

FIG 2 zeigt den Rotor 3 mit zwölf Nutaussparungen 15, in denen jeweils ein Leiterstab 16 angeordnet ist. Die Nutaussparung 15 ist dabei wesentlich größer dimensioniert als der Leiterstab 16 selbst und stellt somit einen Universalblechschnitt für andere Käfigläufer gleicher Achshöhe dar. Damit lassen sich nunmehr in die Nutaussparung 15 auch Leiterstäbe einsetzen, wie sie die Figuren 4 bis 6 aufzeigen, d.h. im wesentlichen Doppelstäbe für Doppelstabläufer unterschiedlichster Formgebung oder auch Hochstabquerschnitte. Es sind selbstverständlich auch im Querschnitt betrachtet Rundstäbe oder trapezförmige Stäbe in die Nutaussparungen 15 einsetzbar.

Pro Nutaussparung 15 ist normalerweise nur ein Stab vorgesehen, es sind jedoch auch Nutaussparungen 15 denkbar in denen zwei oder mehrere Stäbe angeordnet sind. Dies reduziert Skineffekte, die bei Stäben größerer Querschnitte auftreten können. Die verbleiben "Hohlräume" werden dabei auch erfindungsgemäß mit Metallschaum versehen.

Der verbleibende Raum - also der "Hohlraum" - zwischen den Leiterstäben und der Innenseite der Nutaussparung 15 wird erfindungsgemäß durch einen Metallschaum 17 ausgekleidet. Dabei ergibt sich eine Fixierung der Leiterstäbe 16 in der Nutaussparung 15, als auch eine Art Isolation des Leiterstabes 16 zum Blechpaket des Rotors 3, ebenso wie eine ausreichende magnetische Leitfähigkeit um Stromverdrängungseffekte zu garantieren.

Die Stege des Metallschaums 17 bzw. dessen Poren in der Nutaussparung 15 in den Figuren 2, 4, 5 und 6 sind aus zeichnerischen Gründen teilweise überdimensioniert dargestellt.

In die Nutaussparungen 15 werden entweder einzelne oder mehrere Leiterstäbe 16 eingesetzt oder ein Halbkäfig gemäß FIG 3. Dabei sind an einem Kurzschlussring 13 bereits einseitig Leiterstäbe 16 angeschweißt, angegossen oder angelötet, wobei dann der gesamte Halbkäfig in ein Blechpaket mit Nutaussparungen 15 eingesetzt wird.

Vorteilhafterweise kann durch eine Verwindung des Blechpakets um die Achse 19 eine Schrägung der Nuten schaffen werden, was für die Reduzierung der Drehmomentwelligkeit der Asynchronmaschine vorteilhaft ist.

In dem Verfahren zur Herstellung eines derartigen Käfigläufers sind nunmehr selbstverständlich die fehlenden Kurzschlussringe an die axial aus dem Blechpaket ragenden Leiterstäbe elektrisch zu kontaktieren respektive anzuschweißen oder zu löten.

## Patentansprüche

1. Käfigläufer (3) einer Asynchronmaschine mit radial geschlossenen oder teilgeöffneten Nutaussparungen (15), mit Leiterstäben (16), die in den Nutaussparungen (15) angeordnet sind, **dadurch gekennzeichnet, dass** die Leiterstäbe (16) durch Metallschaum (17) in den Nutaussparungen (15) fixiert sind.

2. Rotatorische dynamoelektrische Maschine oder lineare dynamoelektrische Maschine, insbesondere Asynchronmotor mit zumindest einem Käfigläufer (3) nach Anspruch 1.

3. Werkzeugmaschine, E-Car oder Schienenfahrzeug mit zumindest einer dynamoelektrischen Maschine nach Anspruch 2.

4. Verfahren zur Herstellung eines Käfigläufers (3) nach Anspruch 1 durch folgende Schritte:
- Stanzen einzelner Bleche mit Nutaussparungen (15),
- Paketieren der Bleche,
- Einsetzen einzelner Leiterstäbe (16) oder Leiterstäbe, die durch einen Kurzschlussring bereits auf einer Seite verbunden sind,
- Ausfüllen der Nutaussparung mit Metallschaum (17),
- Kontaktieren der fehlenden Kurzschlussringe an einer oder beiden Stirnseiten des Blechpakets des Käfigläufers (3) mit den Leiterstäben (16).

5. Verfahren nach Anspruch 4, **dadurch gekennzeichnet, dass** nach dem Einsetzen der einzelnen Leiterstäbe (16) oder eines Halbkäfigs eine vorgebbare Verdrehung des Blechpakets in Umfangsrichtung zu einer Nutschrägung führt, die sich daraus ergebenden Hohlräume zwischen Leiterstab (16) und Nutaussparung (15) werden durch Metallschaum (17) ausgefüllt.

6. Verfahren nach Anspruch 4 oder 5, **dadurch gekennzeichnet, dass** der Käfigläufer (3) spanabhebend abgedreht wird, um teilgeöffnete Nuten bzw. Nutaussparungen (15) zu erhalten.

## Claims

1. Cage rotor (3) of an asynchronous machine having radially closed or partially opened slot recesses (15), having conductor bars (16), which are arranged in the slot recesses (15), **characterised in that** the conductor bars (16) are fixed in the slot recesses (15) by metal foam (17).

2. Rotary dynamo-electric machine or linear dynamo-electric machine, in particular asynchronous motor having at least one cage rotor (3) according to claim 1.

3. Machine tool, E-car or rail vehicle having at least one dynamo-electric machine according to claim 2.

4. Method for producing a cage rotor (3) according to claim 1 by the following steps:
- Punching individual sheets with slot recesses (15),
- Stacking the sheet metal,
- Inserting individual conductor bars (16) or conductor bars which are already connected on one side by means of a short-circuit ring,
- Filling the slot recess with metal foam (17),
- Contacting the missing short-circuit rings at one or both end faces of the laminated core of the cage rotor (3) to the conductor bars (16).

5. Method according to claim 4, **characterised in that** after inserting the individual conductor bars (16) or a half cage, a predeterminable rotation of the laminated core in the circumferential direction results in a slot cant, the cavities emerging therefrom between the conductor bar (16) and slot recess (15) are filled using metal foam (17).

6. Method according to claim 4 or 5, **characterised in that** the cage rotor (3) is turned in a metal removing manner in order to obtain partially opened slots or slot recesses (15).

## Revendications

1. Rotor (3) à cage d'écureuil d'une machine asynchrone ayant des ouvertures d'encoche (15) fermées ou ouvertes en partie radialement, comprenant des barreaux (16) conducteurs mis dans les encoches (15), **caractérisé en ce que** les barreaux (16) conducteurs sont immobilisés dans les ouvertures d'encoche (15) par de la mousse (17) métallique.

2. Machine dynamoélectrique tournante ou machine dynamoélectrique linéaire, notamment moteur asynchrone, ayant au moins un rotor (3) à cage d'écureuil suivant la revendication 1.

3. Machine-outil, E-car ou véhicule ferroviaire ayant au moins une machine dynamoélectrique suivant la revendication 2.

4. Procédé de fabrication d'un rotor (3) à cage d'écureuil suivant la revendication 1 par les stades suivantes :
- estampage de diverses tôles ayant des ouvertures d'encoche (15),
- mise en paquet des tôles,
- insertion de barreaux (16) conducteurs séparés ou de barreaux conducteurs, qui sont reliés déjà d'un côté par un anneau de court-circuit,
- remplissage de l'ouverture d'encoche par de la mousse (17) métallique,
- mise en contact avec les barreaux (16) conducteurs des anneaux de court-circuit manquants sur l'un ou sur les deux côtés frontaux du paquet de tôles du rotor (3) à cage d'écureuil.

5. Procédé suivant la revendication 4, **caractérisé en ce qu'**après avoir inséré les barreaux (16) conducteur séparés ou une demi-cage, une torsion, pouvant être donnée à l'avance du paquet de tôles dans la direction périphérique, donne une inclinaison de l'encoche, les cavités qui s'ensuivent, entre le barreau (16) conducteur et l'ouverture d'encoche (15), étant remplies de mousse (17) métallique.

6. Procédé suivant la revendication 4 ou 5, **caractérisé en ce que** l'on usine au tour, avec enlèvement de copeaux, le rotor (3) à cage d'écureuil, pour obtenir des encoches (15) ou des ouvertures d'encoche ouvertes en partie.
